**Europäisches Patentamt**

**European Patent Office**

**Office européen des brevets**

(19)

(11) Veröffentlichungsnummer : **0 501 143 B1**

(12)

# EUROPÄISCHE PATENTSCHRIFT

(45) Veröffentlichungstag der Patentschrift :
30.06.93 Patentblatt 93/26

(51) Int. Cl.$^5$ : **C01B 33/20**

(21) Anmeldenummer : **92101116.9**

(22) Anmeldetag : **24.01.92**

(54) **Thermisch gespaltenes Zirkonsilikat, Verfahren zu seiner Herstellung und Verwendung.**

(30) Priorität : **01.03.91 DE 4106536**

(43) Veröffentlichungstag der Anmeldung :
**02.09.92 Patentblatt 92/36**

(45) Bekanntmachung des Hinweises auf die
Patenterteilung :
**30.06.93 Patentblatt 93/26**

(84) Benannte Vertragsstaaten :
**DE ES FR GB IT NL**

(56) Entgegenhaltungen :
**EP-A- 0 119 877**
**GB-A- 1 447 276**

(73) Patentinhaber : **Degussa Aktiengesellschaft**
**Weissfrauenstrasse 9**
**W-6000 Frankfurt am Main 1 (DE)**

(72) Erfinder : **Binder, Dieter, Dr.**
**Schanzenkopfstrasse 22**
**W-8755 Alzenau 2 (DE)**
Erfinder : **Kleinschmit, Peter, Dr.**
**Wildaustrasse 19**
**W-6450 Hanau 9 (DE)**
Erfinder : **Zetzmann, Klaus, Dr.**
**Julius-Ecater-Strasse 2**
**W-8752 Kleinostheim (DE)**
Erfinder : **Hoffmeister, Hans, Dr.**
**Frankfurter Strasse 2a**
**W-6460 Gelnhausen (DE)**

EP 0 501 143 B1

**Beschreibung**

Die Erfindung betrifft thermisch gespaltenes Zirkonsilikat, in dessen amorpher Kieselsäurephase monokline Zirkonoxidkristalle mit definierter Kornverteilung und spezifischer Oberfläche eingebettet sind. Weitere Erfindungsgegenstände richten sich auf die Herstellung dieses thermisch gespaltenen Zirkonsilikats sowie seine Verwendung.

Zirkonoxid ($ZrO_2$) in Form des natürlich vorkommenden Baddeleyits oder synthetisch hergestellter Produkte ist ein wichtiger Rohstoff zur Herstellung von Zirkonoxid-Keramik und Zirkonsilikat-Farbkörpern. Zirkonoxid läßt sich durch chemischen Aufschluß mit nachfolgender Hydrolyse der zunächst erhaltenen Zirkonate oder durch thermische Spaltung von Zirkonsilikat ($ZrSiO_4$) mit nachfolgender Abtrennung der Kieselsäure gewinnen. Die thermische Spaltung von Zirkonsilikat erfolgt bei Temperaturen oberhalb etwa 1700 °C - W.C. Butterman et al, Amer. Mineralogist 52 (1967), 884. Bei etwa 1760 °C beginnt sich $ZrSiO_4$ in tetragonales festes $ZrO_2$ und flüssiges $SiO_2$ zu zersetzen. Oberhalb etwa 2400 °C bilden $ZrO_2$ und $SiO_2$ eine einheitliche Flüssigkeit, welche durch schnelles Abkühlen erstarrt - bei dem so erhältlichen thermisch gespaltenen Zirkonsilikat handelt es sich um eine amorphe Kieselsäurephase, in welche Zirkonoxidkristalle eingebettet sind, welche durch Flotations- und/oder Laugungsverfahren von der $SiO_2$-Phase abgetrennt werden können.

Thermisch gespaltene Zirkonsilikate, also $ZrO_2$-Kristalle in einer amorphen $SiO_2$-Matrix, wie sie bisher bekannt geworden sind und teilweise Eingang in den Markt gefunden haben, lassen sich in unterschiedlich ausgestalteten Lichtbogen- bzw. Plasmaverfahren gewinnen.

Bei den Plasmaverfahren - vgl. z. B. GB-PS 1 248 595 und Ceramics, Febr. 1974, Seite 30 - läßt man einen Vorhang aus Zirkonsand durch die Flamme des Plasmabrenners rieseln, wobei das Zirkonsilikat thermisch gespalten und dann gekühlt wird. Eine vollständige Spaltung des $ZrSiO_4$ erfordert die Verwendung von feinstgemahlenem Zirkonmehl; eine Mahlung des Zirkonsandes ist energieintensiv und zudem werden Fremdbestandteile aus dem Mahlaggregat eingeschleppt. Die im Plasmaverfahren erhältlichen Produkte enthalten $ZrO_2$-Kristalle mit einem Durchmesser von 0,1 bis 0,2 µm und einer Länge von vielen µm (vgl. GB-PS 1 447 276), weisen jedoch eine andere Morphologie auf als die erfindungsgemäßen Produkte.

Gemäß einem anderen Verfahren wird Zirkonsilikat im Lichtbogen geschmolzen und als Block erstarren lassen, der Schmelzkörper anschließend gebrochen und gemahlen - vgl. Gmelin's Handbuch der anorg. Chemie, Zirkonium, Band 42 (1958), Seite 56. Das so hergestellte thermisch gespaltene Zirkonsilikat enthält Zirkonoxid mit einer mittleren Korngröße ($d_{50}$-Wert) um 15 bis 20 µm und eine BET-Oberfläche um 0,5 m2/g.

Alternativ kann auch die Schmelze aus einem Lichtbogen-Schmelzofen entnommen und durch Abkühlen an Luft in ein kugelförmiges Produkt überführt werden - vgl. DE-PS 26 35 030. Die Anmelderin der vorliegenden Erfindung stellte fest, daß die Kornverteilung des Zirkonoxids im so hergestellten thermisch gespaltenen Zirkonsilikat zu einem mittleren Korndurchmesser -$d_{50}$-Wert, bestimmt mittels Laserbeugung - von über 3 µm und zu einer spezifischen Oberfläche nach BET um 2 m2/g führt. Die Stoffdatenermittlung erfolgte hier, wie in den anderen Fällen, an Zirkonoxid, das durch Auslaugung des thermisch gespaltenen Zirkonsilikats mit konzentrierter Natronlauge bis zu einem $SiO_2$-Restgehalt von unter 0,5 Gew.-% erhalten wurde.

Aus der DE-PS 21 43 526 und GB-PS 1 447 276 ist bekannt, daß thermisch gespaltenes Zirkonsilikat als Rohstoff für keramische Farbkörper auf der Basis von Zirkonsilikat, etwa Einschlußpigmente, z. B. Zirkon-Eisen-Rosa, und Pigmente vom Wirtsgittertyp, z. B. Zirkon-Vanadin-Blau und Zirkon-Praseodym-Gelb, geeignet sind. Es zeigte sich, daß die gestiegenen Anforderungen bezüglich Farbintensität und zum Teil auch des Farborts von mit den bisher zugänglichen thermisch gespaltenen Zirkonsilikat-Farbkörpern nicht mehr erfüllt werden. Um die Wirtschaftlichkeit der Dekorgestaltung keramischer Artikel zu erhöhen und/oder brillantere Farbtöne zu erhalten, ist die Fachwelt äußerst daran interessiert, farbintensivere Farbkörper zu erzeugen. Ein Ansatzpunkt zur Erreichung dieses Ziels besteht im Auffinden geeigneterer Rohstoffe, wie der Quelle für Zirkonoxid.

Aufgabe der Erfindung ist somit, neue thermisch gespaltene Zirkonsilikate aufzuzeigen, welche sich als Quelle für Zirkonoxid zur Farbkörperherstellung auf Zirkonsilikatbasis besser eignen, d. h. farbintensivere Farbkörper herzustellen gestatten, als vorbekannte thermisch gespaltene Zirkonsilikate.

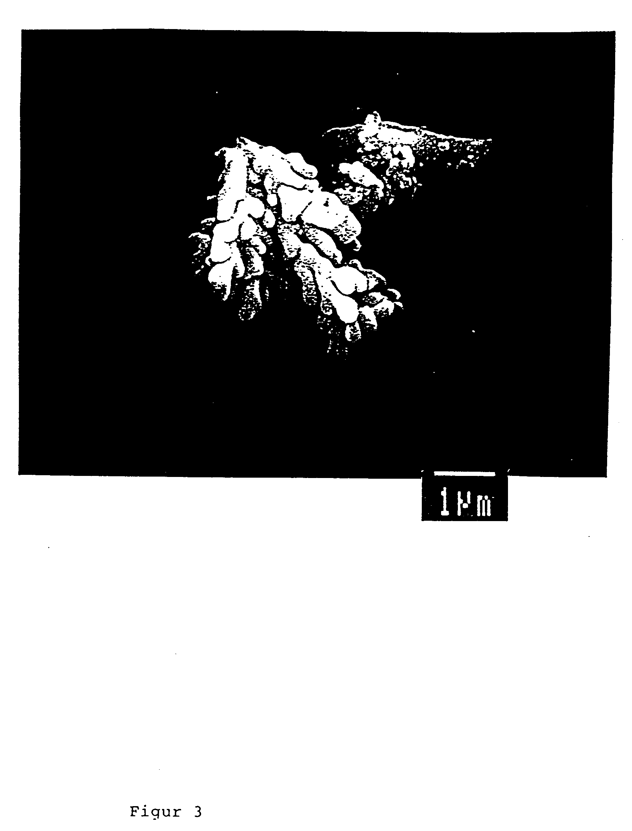

Gefunden wurde thermisch gespaltenes Zirkonsilikat, das dadurch gekennzeichnet ist, daß das in einer amorphen Kieselsäurephase eingebettete Zirkonoxid eine mittlere Korngröße ($d_{50}$-Wert) im Bereich von 0,5 µm bis 3,0 µm und eine an der ausgelaügten Probe gemessene spezifische Oberfläche (BET) im Bereich von 3 bis 15 m2/g aufweist. Das Zirkonoxid weist, wie aus der rasterelektronenmikroskopischen Aufnahme der Figur 3 hervorgeht, eine typische Morphologie auf, welche als dendritenförmig bezeichnet werden könnte.

Bevorzugte Produkte weisen für das in der $SiO_2$-Phase eingebettete Zirkonoxid $d_{50}$-Werte im Bereich von 0,5 µm bis 2,0 µm und eine spezifische BET-Oberfläche im Bereich von 5 m2/g bis 12 m2/g auf. Besonders bevorzugte Produkte zeichnen sich durch ein sehr enges Kornspektrum des Zirkonoxids aus, wobei mindestens 90 % des Zirkonoxids aus Teilchen mit einem Durchmesser von kleiner 10 µm, insbesondere kleiner 5

μm, und größer 0,2 μm besteht. Die Kornverteilung, darunter der $d_{50}$-Wert, wurde durch Laserbeugung mit Wasser als Suspensionsflüssigkeit, Na-Pyrophosphat als Dispersionsmittel und 5 Minuten Ultraschall-Mischung im Granulometer HR 850 der Firma Cilas-Alcatel ermittelt. Die BET-Oberfläche wurde mit Stickstoff als Adsorptionsgas nach DIN 66131 bestimmt. Die Stoffdaten wurden an durch Laugung mittels konz. Natronlauge erhaltenem Zirkonoxid ermittelt.

Die erfindungsgemäßen thermisch gespaltenen Zirkonsilikate unterscheiden sich, wie vorstehend ausgeführt, in ihren Stoffdaten von jenen der vorbekannten Produkte. Vorbekannte thermisch gespaltene Zirkonsilikate, wie sie bisher Eingang in die Farbkörperherstellung gefunden haben, weisen höhere $d_{50}$-Werte und zudem eine geringere BET-Oberfläche auf. Gegenüber den vorbekannten Produkten können mit den neuen Produkten Zirkonsilikat-Farbkörper vom Wirtsgitter- und Einschlußtyp mit höherer Farbintensität und Verschiebung des jeweiligen Farborts in der gewünschten Richtung hergestellt werden. Unter den Zirkonsilikat-Farbkörpern vom Wirtsgittertyp werden insbesondere solche verstanden, in welchen $Zr^{4+}$-Positionen im Gitter valent kompensiert durch farbgebende Ionen wie insbesondere Vanadium-(Blau), Praseodym-(Gelb) oder Terbiumionen (Gelb) eingenommen werden (vgl. US-PS 2,441,447, GB-PS 1 447 276, Prospekt der Firma Th. Goldschmidt 2/83, Nr. 59). Unter den Farbkörpern vom Einschlußtyp sind solche zu verstehen, in welchen die farbtragende Komponente, wie z. B. Cadmiumsulfoselenide, Eisenoxide, Eisentitanate, kolloidale Metalle und Eisen-Manganverbindungen, als diskrete Phase in einer Hülle aus Zirkonsilikat eingeschlossen sind - vgl. DE-PS 23 12 535, DE-PS 23 23 770, DE-PS 21 43 525, DE-OS 39 06 818, EP-A 0 294 664. Die vorteilhafte und nicht vorhersehbare Wirkung, welche die erfindungsgemäßen thermisch gespaltenen Zirkonsilikate auf die Farbkörper ausüben, folgt aus den Beispielen 2 und 3 und den Vergleichsbeispielen 2 und 3.

Eine weitere Verwendung der erfindungsgemäßen Produkte besteht darin, mittels an sich bekannter Laugungsverfahren das in dem thermisch gespaltenen Zirkonsilikat enthaltende monokline Zirkonoxid zu gewinnen. Unter den bekannten Laugungsverfahren ist jenes unter Verwendung von konzentrierten Alkalilaugen, insbesondere 30 - 50 gew.-%iger Natronlauge hervorzuheben. Das thermisch gespaltene Zirkonsilikat wird hierzu bei im allgemeinen 100 bis 200 °C, insbesondere 115 bis 170 °C, ggf. unter Druck, ein oder mehrmals mit der Lauge behandelt und einer Fest-Flüssigphasentrennung zugeführt. Die Laugung kann isotherm oder isobar durchgeführt werden. Bezogen auf das im thermisch gespaltenen Zirkonsilikat enthaltene $SiO_2$ werden mindestens 2 Äquivalente Alkalihydroxid eingesetzt. Die Laugungsdauer, welche im allgemeinen zwischen 1 und 10 Stunden liegt, richtet sich nach der Temperatur, der Laugekonzentration und der Korngröße des eingesetzten thermisch gespaltenen Zirkonsilikats. Auf diese Weise sind Zirkonoxide mit einem $SiO_2$-Gehalt unter 0,5 Gew.-% erhältlich.

Es wurde gefunden, daß das erfindungsgemäße thermisch gespaltene Zirkonsilikat durch induktives Schmelzen von Zirkonsilikat in einem Hochfrequenz- oder Mittelfrequenz-Induktionsofen mit einem Sinterkrustentiegel bei einer Temperatur im Bereich von 2500 bis 3000 °C und nachfolgendem Abschrecken der Schmelze hergestellt werden kann. Das Verfahren ist dadurch gekennzeichnet, daß man die Schmelze in Form eines Strahls abzieht, diesen Strahl in freiem Fall durch Anblasen mit einem inerten kühlen Gas und/oder durch Besprühen mit Wasser auffächert und dabei die Schmelze abschreckt und das so erhaltene Produkt nach Bedarf brechend und/oder mahlend zerkleinert.

Zweckmäßigerweise wird ein dünner, insbesondere 5-20 mm breiter Schmelzstrahl über eine Rinne aus dem Tiegel abgezogen und mittels einer oder mehreren Düsen mit Druckluft angeblasen. Im allgemeinen wird das verwendete Gas etwa Raumtemperatur haben, höhere oder niedrigere Temperaturen sind aber möglich. Alternativ wird, ebenfalls in freiem Fall, die Schmelze mit Wasser aus einer oder mehreren Düsen besprüht. Gemäß einer besonders bevorzugten Ausführungsform wird der Schmelzstrahl zunächst mit Luft angeblasen und anschließend, weiterhin im freien Fall, mit Wasser, vorzugsweise aus zwei oder mehreren, ggf. verstellbaren, übereinander angeordneten Düsen, besprüht. Zum Abschrecken der abgezogenen Schmelze sind im allgemeinen 0,1 bis 3 $Nm^3$ Luft pro kg Schmelze ausreichend. Für das Abschrecken durch Besprühen mit Wasser hat sich eine Wassermenge im Bereich von 10 bis 100 l pro kg Schmelze als geeignet erwiesen. Das nun erstarrte Produkt kann, soweit erforderlich, in einem Wasserbecken oder einer Wasserrinne weiter gekühlt werden. Das Produkt fällt in Form von Granalien mit einer Länge von etwa 1 mm bis 10 mm an und kann getrocknet und nach Bedarf in bekannter Weise gebrochen und/oder auf den gewünschten Mahlgrad trocken oder naß gemahlen werden.

Die Art des Abschreckens ist für die Stoffdaten des thermisch gespaltenen Zirkonsilikats und des darin enthaltenen Zirkonoxids entscheidend. Ein langsames Abkühlen der Schmelze führt zu größeren $ZrO_2$-Kristallen, welche die vorstehend beschriebenen Nachteile bei der Farbkörperherstellung mit sich bringen. Durch einfaches Eingießen der Schmelze in Wasser erhält man Produkte mit einem sehr breiten -für die Farbkörperbildung nachteiligen - Kornspektrum, das außerhalb des beanspruchten Bereichs liegt.

Zum Schmelzen des Zirkonsilikats zwecks thermischer Spaltung kommen solche Öfen in Betracht, in welchen eine einheitliche Schmelze erzeugt und in Form eines dünnen Strahls abgezogen werden kann. Das Schmelzen kann beispielsweise mittels eines Lichtbogens oder durch induktives Heizen bewerkstelligt werden. Ein Induktionsschmelzofen mit Sinterkrustentiegel, wie er aus der EP-B 0 119 877 bekannt geworden ist, eignet sich sehr gut.

In dem genannten Dokument wird Zirkonsilikat beispielhaft als zu schmelzendes Material genannt, es fehlen aber Hinweise auf die thermische Spaltung und die Art und Weise, wie Schmelze gleichförmig entnommen und abgeschreckt werden soll. Gemäß einer Ausführungsform der EP-B 0 119 877 weist der Ofen ein seitlich durch die Spule tretendes, ggf. gekühltes Rohr auf, das der Abnahme der Schmelze dienen soll; die Schmelze wird in ein Wasserbecken auslaufen lassen. Im Falle einer Schmelze thermisch gespaltenen Zirkonsilikats kommt es beim Abkühlen zu einer Volumenzunahme, so daß das Abflußrohr verstopft: Ein Öffnen des Auflaufrohrs mittels Meißel- und Bohrwerkzeugen erwies sich wegen der Härte und Sprödigkeit der erstarrten Schmelze als unbefriedigend.

Für das Gelingen des Verfahrens ist wesentlich, daß ein gleichförmiger Strahl Schmelze aus dem Ofen abgenommen und der Abschreckvorrichtung zugeführt werden kann. Dies gelingt, wenn das Verfahren in einem Induktionsschmelzofen, dessen Wand als Schmelzspule ausgebildet ist und einen Sinterkrustentiegel umhüllt, teilkontinuierlich ausgeführt wird. Hierbei wird in periodischen Abständen ein Teil der Schmelze, vorzugsweise 5 bis 30 % des Tiegelinhalts, abgenommen und die entsprechende Menge Zirkonsilikat dem Tiegel zugeführt. Als Auslaufvorrichtung wird eine am oberen Rand der Induktionsspule angeordnete offene Auslaufrinne verwendet, welche intensiv gekühlt wird. In periodischen Abständen wird der Auslauf der Schmelze durch Schmelzanstich mittels einer Anstichvorrichtung gestartet und die Auslaufmenge nach Bedarf durch Kippen des Ofens mittels einer Kippvorrichtung reguliert. Die Anstichvorrichtung umfaßt eine Anstichlanze und automatisch regelbare Vorrichtungen zur Veränderung des Neigungswinkels oder zur vertikalen Parallelverschiebung der horizontal oder geneigt angeordneten Anstichlanze und zum Vortreiben derselben. Die Anstichlanze wird so geführt, daß sie zunächst die Schmelznase des aus dem vorangegangenen Schmelzanstich in der Auslaufrinne verbliebenen Rests an erstarrter Schmelze von unten erfaßt und anhebt und anschließend zwischen der angehobenen erstarrten Schmelze und dem Boden der Rinne bis zum Durchstich durch die Sinterkruste vorangetrieben werden kann.

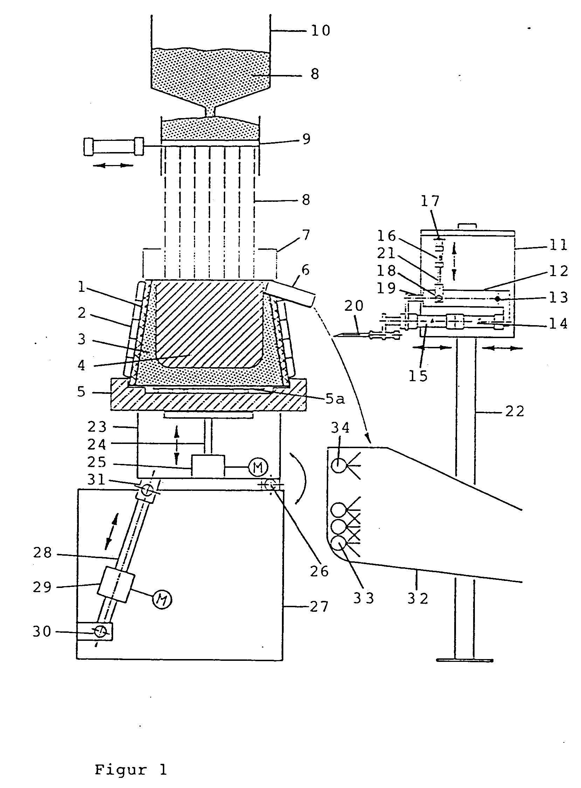

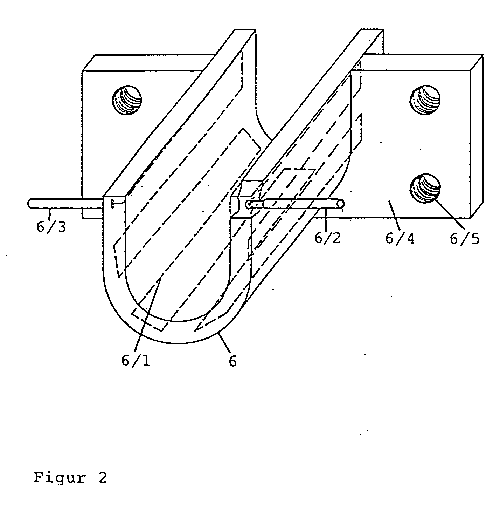

Figur 1 zeigt eine für das erfindungsgemäße Verfahren geeignete Induktionsschmelzanlage mit Vorrichtungen zum Befüllen des Ofens, zum Schmelzanstich und zum Abkühlen der Schmelze. Die Kondensatoren des Schwingkreises, der Frequenzgenerator und weiteren erforderlichen elektrischen Einrichtungen sind nicht gezeigt. Die Resonanzfrequenz des Schwingkreises kann im Hochfrequenzbereich (größer 10 kHz) mittels Röhrengeneratoren, im Mittelfrequenzbereich (um/kleiner 10 kHz) mittels Thyristor-gesteuerter Generatoren vom Invertertyp erzeugt werden. Figur 2 zeigt eine vorteilhafte Auslaufrinne für die Schmelze.

In Figur 1 bedeuten 1 eine Schmelzspule, welche von einer Kühlvorrichtung 2 umgeben ist und den die Schmelze 4 aufnehmenden gebildeten Sinterkrustentiegel 3 aus dem zu schmelzenden Material umhüllt. Die Schmelzspule ruht auf einer Gußform 5, welche auch den gekühlten und von der Spule isolierten Spulenboden 5a aufnimmt. Die offene Auslaufrinne 6 ist so im Bereich des oberen Randes der Spule fixiert (mittels einer in Fig. 2 gezeigten Haltevorrichtung 6/4 und Bohrungen 6/5 für Befestigungselemente), daß der Rinnenboden vor dem Schmelzanstich unterhalb des Niveaus der Schmelze liegt und der obere Rand der Rinne im wesentlichen mit dem Rand der Schmelzspule abschließt.

Die Schmelzspule kann ein- oder mehrwindig sein; einwindige Spulen aus Kupfer oder Aluminium werden bevorzugt, weil hiermit Spulen mit größerem Spulendurchmesser eingesetzt werden können, was eine Voraussetzung für Anwendungen des Ofens im Betriebsmaßstab ist. Um das Entfernen des Schmelzregulus nach Beendigung des Schmelzens mit periodischen Schmelzanstichen und Abkühlen zu erleichtern, ist es zweckmäßig, einen Spulenkörper in leicht konischer Form (gemäß Fig. 1) einzusetzen, weil sich das Schmelzgut während des Abkühlens durch Modifikationsumwandlungen ausdehnt.

Die Beschickung des Schmelztiegels erfolgt aus dem Vorratsbehälter 10, aus welchem das zu schmelzende Material einer Vorrichtung 9 zum flächigen Dosieren des Materials 8 zugeführt wird. Zur Minimierung von Wärmeverlusten können Wärmeschutzschilde 7 um den oberen Rand des Ofens angeordnet sein; zusätzlich ist es zweckmäßig, die Tiegeloberfläche mit dem zu schmelzenden Material bedeckt zu halten.

Mittels einer Vorrichtung 23 zum Heben und Senken des Spulenbodens - beispielsweise umfaßt sie in Figur 1 einen Hubzylinder 24 und ein Antriebsaggregat 25 - läßt sich der erstarrte Regulus leicht aus der Spule entfernen. Mittels der Kippvorrichtung 27, welche in unterschiedlicher Form ausgebildet sein kann - in Figur 1 bedeuten 28 eine Hubstange, 29 ein Antriebsaggregat, 30 und 31 Angriffspunkte der Hubvorrichtung und 26 den Drehpunkt des Ofens - läßt sich die Ausflußmenge an Schmelze durch Kippen des Ofens regulieren.

Die Vorrichtung 32 dient der Weiterbehandlung der periodisch über die Rinne 6 auslaufenden Schmelze. Mit 34 ist eine Druckluftdüse, mit 33 eine Sprühdüse für Wasser (hier 3 Düsen übereinander) bezeichnet; das erstarrte Material wird in der als Wanne ausgebildeten Vorrichtung 32 den nicht gezeigten Trocknungs- und Brech- bzw. Mahleinrichtungen zugeführt.

Die in Figur 1 dargestellte Ausführungsform der Schmelzanstichvorrichtung umfaßt eine Hubvorrichtung, welche als ein am Befestigungspunkt 17 einer Halterung 11 fixierten pneumatischer Zylinder 16 ausgebildet ist; die Hubstange 21 greift den das Vortriebsgestänge 19 aufnehmenden Haltebügel 12, der am Befestigungspunkt 13 drehbar an der Halterung 11 befestigt ist, am Drehpunkt 18 an; durch Betätigen des Hubzylinders wird der Neigungswinkel der Anstichlanze 20 in vertikaler Richtung verändert und kann somit dem Neigungswinkel der Auslaufrinne 6 angepaßt werden. Eine Vorrichtung zum Vortreiben der Anstichlanze bzw. des sie tragenden Gestänges 19 wird von zwei pneumatischen Zylindern 14 und 15, welche am Haltebügel 12 befestigt sind und das Vortriebsgestänge aufnehmen, gebildet.

In Figur 2 ist eine bevorzugte Ausführungsform der nach oben offenen kühlbaren Rinne dargestellt. Der Mantel der Rinne enthält eine maximale Zahl Bohrungen 6/1 parallel zur Längsrichtung der Rinne (in Fig. 2 gestrichelt dargestellt), welche mäanderartig miteinander verbunden sind und von einem Kühlmedium, das durch Leitung 6/2 zu und durch Leitung 6/3 abgeführt wird, durchflossen werden. Die Halterung 6/4, welche mittels Befestigungselementen (6/5 stellt eine Bohrung hierfür dar) an der Schmelzspule fixiert wird, dient der Positionierung der Rinne. Eine möglichst intensive Kühlung der Rinne wird bevorzugt, weil unter dieser Voraussetzung im Schmelzbetrieb außer einer leicht entfernbaren Schmelznase keine Anbackungen auftreten.

**Beispiel 1a und 1b**

In der in Figur 1 dargestellten Anlage wurde Zirkonsilikat geschmolzen, periodisch ein Schmelzanstich durchgeführt und abgeschreckt mittels einer Druckluftdüse und zwei bzw. drei übereinander angeordneten Wassersprühdüsen. Geschmolzen wurde bei 2700 °C unter Verwendung einer einwindigen Schmelzspule - Durchmesser 40 cm, Höhe 25 cm; Arbeitsfrequenz 120 kHz; Durchmesser der Auslaufrinne (gemäß Fig. 2) 16 mm, Kühlwasserdurchfluß 400 l/h; Durchsatz an Zirkonsilikat 20 kg/h, 4 bis 5 Anstiche pro Stunde. Pro Schmelzanstich wurden ca. 4 $Nm^3$ Luft und ca. 200 l (Beispiel 1a) bzw. 300 l (Beispiel 1b) Wasser für die Abschreckung verwendet. Die Kornverteilung und spezifische Oberfläche des durch Auslaugen des thermisch gespaltenen Zirkonsilikats mit 50 gew.-%iger Natronlauge bis zu einem Restgehalt von unter 0,5 Gew.-% $SiO_2$ erhaltenen Zirkonoxids folgen aus der Tabelle.

| | Beispiel 1a | Beispiel 1b |
|---|---|---|
| Art des Abschreckens | 1 Luftdüse und 3 Wasserdüsen | 1 Luftdüse und 2 Wasserdüsen |
| Kornverteilung * | | |
| $d_{10}$ (µm) | 2,92 | 7,35 |
| $d_{50}$ (µm) | 0,94 | 1,96 |
| $d_{90}$ (µm) | 0,37 | 0,44 |
| Spez. Oberfläche (BET) $m^2$/g | 8,5 | 6,1 |

\* Die $d_{10}$- bzw. $d_{90}$-Werte geben an, daß 10 bzw. 90 % des Materials Teilchendurchmesser oberhalb der angegebenen Werte aufweisen; der $d_{50}$-Wert ist der mittlere Teilchendurchmesser.

**Beispiel 2 und Vergleichsbeispiel 2**

Herstellung eines Zirkon-Eisen-Farbkörpers

Aus den nachfolgend genannten Bestandteilen wurde ein Pulvergemisch hergestellt, geglüht, aufgearbeitet und in einem Glasurtest geprüft. Zum Einsatz kam in Beispiel 2 das thermisch gespaltene Zirkonsilikat gemäß Beispiel 1a, im Vergleichsbeispiel 2 thermisch gespaltenes Zirkonsilikat "S 120" der Firma SEPR / Frankreich ($d_{50}$-Wert des darin enthaltenen Zirkonoxids = 3,3 $\mu$m; BET-Oberfläche = 2,2 m²/g).

| | |
|---|---|
| $ZrO_2$/$SiO_2$: | 71 g (=thermisch gesp. Zirkonsilikat) |
| $ZrO_2$: | 5 g ($ZrO_2$ "CC10" der Fa. SEPR) |
| $Fe_2O_3$: | 16 g |
| $Na_2SiF_6$: | 8 g |
| Mischung: | 2 h in Fliehkraft-Kugelmühle (Mahlbecher aus Hartporzellan 350 ml, Mahlkugeln aus $Al_2O_3$ Ø 30 mm 4 St.) |
| Glühung: | In 100 ml-Schamotte-Tiegel, ausgeschmiert mit $ZrSiO_4$, abgedeckt mit $Al_2O_3$-Scherben, in 2 h auf 1050 °C erhitzen, 0,5 h Haltezeit |
| Aufarbeitung: | Zerkleinern des rotbraunen Glühguts nach Zusatz von 30 ml Wasser in Kugelmühle (s.o.), waschen durch fünfmaliges Dekantieren mit je 1 l Wasser, trocknen bei 110 °C im Trockenschrank |
| Glasurtest: | zirkongetrübte Glasur, Einfärbung 6 % Farbkörper in Glasurschlicker, der mit Glasurschlitten auf einen Steingutscherben aufgebracht wird. |
| | Glasurbrand:    Aufheizzeit 7 h auf 1100°C Haltezeit 45 min bei 1100°C |
| | Farbwerte:     CIE-LAB-Farbsystem (DIN 5033, 6164, 6174) |

Folgende Farbwerte wurden gefunden:

| | Beispiel 2 | Vergleichsbeispiel 2 |
|---|---|---|
| L | 50,5 | 56,3 |
| a | 20,9 | 19,5 |
| b | 14,7 | 17,5 |

Das erfindungsgemäße Produkt führt also zu einem intensiveren und röteren Farbkörper.

Durch Optimierung der Rezeptur des zu glühenden Gemischs, insbesondere des Fe-Zubringers und der Mineralisatoren lassen sich die Farbkörper hinsichtlich der Lab-Werte verbessern, der Unterschied zwischen dem erfindungsgemäßen und dem vorbekannten thermisch gespaltenen Zirkonsilikat bleibt aber bestehen.

**Beispiel 3 und Vergleichsbeispiel 3**

Herstellung eines Zirkon-Vanadin-Blaufarbkörpers

Im Beispiel 3 wurde thermisch gespaltenes Zirkonsilikat des Beispiels 1b, im Vergleichsbeispiel 3 das Marktprodukt "DIN 100" der Firma Hüls AG ($d_{50}$-Wert des darin enthaltenen $ZrO_2$ = 17,7 $\mu$m, BET-Oberfläche = 0,5 m²/g) eingesetzt.

| | |
|---|---|
| $ZrO_2$/$SiO_2$: | 85 g |
| NaF: | 5 g |
| NaCl: | 5 g |
| $NH_4VO_3$: | 5 g |
| Mischung: | 3 min in hochtouriger Schlagmühle |
| Glühung: | In 100 ml-Schamotte-Tiegel, ausgeschmiert mit $ZrSiO_4$, abgedeckt mit $Al_2O_3$-Scherben. |
| Aufheizzeit: | 6 h auf 750 °C |
| Haltezeit: | 1 h |

Aufarbeitung des blauen Glühguts und der Glasurtest erfolgten gemäß Beispiel 2 / Vergleichsbeispiel 2:

| | Beispiel 3 | Vergleichsbeispiel 3 |
|---|---|---|
| L | 67,1 | 71,8 |
| a | -8,5 | -8,7 |
| b | -19,4 | -16,2 |

Das erfindungsgemäße Produkt führt zu einem intensiveren und blaueren Farbkörper.

## Patentansprüche

1. Thermisch gespaltenes Zirkonsilikat,
   dadurch gekennzeichnet,
   daß das in einer amorphen Kieselsäurephase eingebettete kristalline Zirkonoxid eine mittlere Korngröße ($d_{50}$-Wert) im Bereich von 0,5 μm bis 3,0 μm und eine an der ausgelaügten Probe gemessene spezifische Oberfläche (BET) im Bereich von 3 bis 15 $m^2/g$ aufweist.

2. Thermisch gespaltenes Zirkonsiliat nach Anspruch 1,
   dadurch gekennzeichnet,
   daß der $d_{50}$-Wert des Zirkonoxids im Bereich von 0,5 μm bis 2,0 μm und die spezifische Oberfläche im Bereich von 5 $m^2/g$ bis 12 $m^2/g$ liegt.

3. Thermisch gespaltenes Zirkonsilikat nach Anspruch 1 oder 2,
   dadurch gekennzeichnet,
   daß mindestens 90 % des Zirkonoxids aus Teilchen mit einem Durchmesser von kleiner 10 μm, bevorzugt kleiner 5 μm, und größer 0,2 μm besteht.

4. Verfahren zur Herstellung des thermisch gespaltenen Zirkonsilikats der Ansprüche 1 bis 3, indem man Zirkonsilikat in einem Hochfrequenz- oder Mittelfrequenz-Induktionsschmelzofen mit Sinterkrustentiegel bei einer Temperatur im Bereich von 2500 bis 3000 °C schmilzt und die Schmelze vom Induktionsschmelzofen abzieht und abschreckt,
   dadurch gekennzeichnet,
   daß man die Schmelze in Form eines Strahls abzieht, diesen Strahl in freiem Fall durch Anblasen mit einem inerten kühlen Gas und/oder durch Besprühen mit Wasser auffächert und dabei die Schmelze abschreckt und das so erhaltene Produkt nach Bedarf brechend und/oder mahlend zerkleinert.

5. Verwendung des thermisch gespaltenen Zirkonsilikats der Ansprüche 1 bis 3 zur Herstellung von Zirkonsilikat-Farbkörpern vom Wirtsgitter- und Einschlußtyp.

6. Verwendung des thermisch gespaltenen Zirkonsilikats der Ansprüche 1 bis 3 zur Gewinnung des darin enthaltenen Zirkonoxids.

## Claims

1. Thermally decomposed zirconium silicate, characterized in that the crystalline zirconium oxide embedded in an amorphous silica phase has an average particle size ($d_{50}$ value) in the range from 0.5 μm to 3.0 μm and a specific surface (BET) in the range from 3 to 15 $m^2/g$.

2. Thermally decomposed zirconium silicate as claimed in claim 1, characterized in that the $d_{50}$ value of the

zirconium oxide is in the range from 0.5 μm to 2.0 μm and the specific surface is in the range from 5 m²/g to 12 m²/g.

3. Thermally decomposed zirconium silicate as claimed in claim 1 or 2, characterized in that at least 90% of the zirconium oxide consists of particles smaller than 10 μm, preferably smaller than 5 μm and larger than 0.2 μm in diameter.

4. A process for the production of the thermally decomposed zirconium silicate claimed in claims 1 to 3, in which zirconium silicate is melted at a temperature of 2,500 to 3,000°C in a high-frequency or medium-frequency induction melting furnace with a sinter crust crucible and the melt is removed from the induction melting furnace and quenched, characterized in that the melt is removed in the form of a jet, the jet is fanned out in free fall by blowing on an inert cool gas and/or by spraying with water and is quenched in the process and the product thus obtained is size-reduced as required by crushing and/or grinding.

5. The use of the thermally decomposed zirconium silicate claimed in claims 1 to 3 for the production of zirconium silicate pigments of the host lattice and inclusion types.

6. The use of the thermally decomposed zirconium silicate claimed in claims 1 to 3 for recovery of the zirconium oxide present therein.

## Revendications

1. Silicate de zirconium décomposé thermiquement, caractérisé en ce que l'oxyde de zirconium incorporé dans une phase de silice amorphe présente une granulométrie moyenne (valeur $d_{50}$) comprise entre 0,5 μm et 3,0 μm et une surface spécifique (BET) mesurée sur l'échantillon lessivé, dans l'intervalle de 3 à 15 m²/g.

2. Silicate de zirconium décomposé thermiquement selon la revendication 1, caractérisé en ce que la valeur $d_{50}$ de l'oxyde de zirconium est dans l'intervalle de 0,5 μm à 2,0 μm et que la surface spécifique est dans l'intervalle de 5 m²/g à 12 m²/g.

3. Silicate de zirconium décomposé thermiquement selon la revendication 1 ou 2, caractérisé en ce qu'au moins 90 % de l'oxyde de zirconium sont constitués de particules d'un diamètre inférieur à 10 μm, de préférence inférieur à 5 μm et supérieur à 0,2 μm.

4. Procédé de préparation de silicate de zirconium décomposé thermiquement des revendications 1 à 3, qui consiste à fondre du silicate de zirconium dans un four de fusion à induction à haute fréquence ou à fréquence moyenne dans un creuset fritté à une température comprise entre 2500 et 3000°C, et à soutirer la masse fondue du four de fusion à induction et à la tremper, caractérisé en ce qu'on soutire la masse fondue sous forme de jet, on traite ce jet en chute gravitaire par soufflage avec un gaz inerte froid et/ou par pulvérisation d'eau et ainsi on trempe la masse fondue et on concasse le produit obtenu selon les besoins et/ou on le pulvérise par broyage.

5. Utilisation de silicate de zirconium décomposé thermiquement des revendications 1 à 3 pour préparer des colorants à base de silicate de zirconium du type à cage ou à inclusion.

6. Utilisation du silicate de zirconium décomposé thermiquement des revendications 1 à 3 pour obtenir l'oxyde de zirconium qui y est contenu.

Figur 1

Figur 2

Figur 3